# EUROPEAN PATENT APPLICATION

(11) **EP 2 930 482 A1**
(43) Date of publication of application: **14.10.2015**
(21) Application number: 14194790.3
(22) Date of filing: 25.11.2014
(51) Int. Cl.: G01J 3/52

(54) **Color matching devices and related methods**

(30) Priority: 09.04.2014 US 201414249215
(71) Applicant: Deluxe Custom Innovations LLC, Tempe, AZ 85281 (US)
(72) Inventor: Badri, Assar, Scottsdale, AZ 85250 (US); Howard, Matt, Tempe, AZ 85283 (US); Dielen, Jules, Phoenix, AZ 85048 (US)
(74) Representative: Mackenzie, Andrew Bryan

(57) **Abstract**

A color matching device includes a planar member comprised of a material chosen from a group of polymers and composites. The planar member has a specified thickness, first length and second length. In implementations the planar member includes an opening through which a painted surface may be viewed. In some embodiments, a color matching device, includes at least one planar member comprising at least one polymer, composite or combination thereof; wherein each planar member comprises a thickness, measured as a shortest distance between a first largest face of the planar member and a second largest face of the planar member, of between about .2 mm and 2 mm; wherein each planar member comprises a first length, substantially orthogonal to the thickness, of between about .5 inches and 8 inches; and wherein each planar member comprises a second length, substantially orthogonal to the thickness and the first length, of between about .5 inch and 14 inches, wherein each planar member further comprises a hang opening centered between a top surface and a bottom surface of the planar member and positioned closer to either a right surface or a left surface of the planar member; wherein the first largest face is orthogonal to each of the top surface, bottom surface, right surface and left surface; wherein the top surface is parallel with the bottom surface; wherein the right surface is parallel with the left surface; wherein the top surface is orthogonal to the right surface.

## Description

### Field of the Subject Matter

Aspects of this document relate generally to spray out cards. Specific implementations relate to spray out cards used for paint matching for a vehicle.

### Background

Spray out cards are sometimes used for paint matching. A user generally sprays paint on a spray out card before spraying paint on an unpainted surface. The color of the paint on the spray out card is generally compared with a painted surface in an attempt to match the color to be painted on the unpainted surface with the color of the painted surface.

### Summary of the Subject Matter

Implementations of color matching devices comprise: at least one planar member, each planar member comprising or consisting essentially of a material chosen from the group consisting of: polycarbonate (PC), acrylonitrile butadiene styrene (ABS), polystyrene (PS), polybutylene terephthalate (PBT), polypropylene (PP), ethylene propylene diene monomer (EPDM), polyethylene terephthalate (PET), polyester (PE), a reinforced thermosetting resin, a glass fiber-reinforced resin, a reinforced polyester, a reinforced polyurethane, a fiber-reinforced polyester, a fiber-reinforced polyurethane, fiberglass, long fiber reinforced thermoplastic (LFRT), talc, and any combination thereof; wherein each planar member has a thickness, measured as a shortest distance between a first largest face of the planar member and a second largest face of the planar member, of between .2 mm and 2 mm; wherein each planar member has a first length, substantially orthogonal to the thickness, of between .5 inches and 8 inches; and wherein each planar member has a second length, substantially orthogonal to the thickness and the first length, of between .5 inches and 14 inches.

Implementations of color matching devices may include one, all, or any of the following:
The material may consist essentially of ABS.

The at least one planar member may include a plurality of planar members that are coupled together with a coupler.

Each planar member may include an opening, completely contained therein, centered between a top surface and a bottom surface of the planar member and centered between a right surface and a left surface of the planar member; wherein the first largest face is orthogonal to each of the top surface, bottom surface, right surface and left surface; wherein the top surface is parallel with the bottom surface; wherein the right surface is parallel with the left surface; wherein the top surface is orthogonal to the right surface, and; wherein the opening forms a circle having a diameter, measured parallel with the first largest face, between .03125 inches and 10 inches.

Each planar member includes a specialized and independent opening, completely contained therein on the planar member, wherein this opening is used to suspend or hang the planar member to dry, once it has been painted. Other openings disclosed herein are not suitable for this purpose, as they are too large, cause the card to lean to the side or at an angle when suspended or they aren't placed correctly on the card to be useful for this purpose.

The material may comprise or consist essentially of 80 weight percent PP and 20 weight percent EPDM.

The material may comprise or consist essentially of 75 weight percent PP, 20 weight percent EPDM and 5 weight percent talc.

A chemical composition of the material may be substantially equivalent to a chemical composition of one of an automobile bumper, an automobile fender flare and an automobile body panel.

Implementations of a color matching device may comprise or consist essentially of: at least one planar member consisting essentially of one of a polymer material and a composite material; wherein each planar member is configured to have a static electricity configuration substantially equivalent to a static electricity configuration of one of an automobile bumper, an automobile fender flare and an automobile body panel; and wherein each planar member has a thickness, measured as a shortest distance between a first largest face of the planar member and a second largest face of the planar member, of between .2 mm and 2 mm; wherein each planar member has a first length, substantially orthogonal to the thickness, of between .5 inches and 8 inches; and wherein each planar member has a second length, substantially orthogonal to the thickness and the first length, of between .5 inches and 14 inches.

Implementations of color matching devices may include one, all, or any of the following:
A chemical composition of the planar member may be substantially equivalent to a chemical composition of the one of an automobile bumper, an automobile fender flare and an automobile body panel.

Each planar member may consist essentially of a material chosen from the group consisting of polycarbonate (PC), acrylonitrile butadiene styrene (ABS), polystyrene (PS), polybutylene terephthalate (PBT), polypropylene (PP), ethylene propylene diene monomer (EPDM), polyethylene terephthalate (PET), polyester (PE), a reinforced thermosetting resin, a glass fiber-reinforced resin, a reinforced polyester, a reinforced polyurethane, a fiber-reinforced polyester, a fiber-reinforced polyurethane, fiberglass, long fiber reinforced thermoplastic (LFRT), talc, and any combination thereof.

The material may comprise or consist essentially of 80 weight percent PP and 20 weight percent EPDM.

The material may comprise or consist essentially of 75 weight percent PP, 20 weight percent EPDM and 5 weight percent talc.

Each planar member may include an opening completely contained therein, the opening centered between a top surface and a bottom surface of the planar member and centered between a right surface and a left surface of the planar member; wherein the first largest face is orthogonal to each of the top surface, bottom surface, right surface and left surface; wherein the top surface is parallel with the bottom surface; wherein the right surface is parallel with the left surface; wherein the top surface is orthogonal to the right surface, and; wherein the opening forms a circle having a diameter, measured parallel with the first largest face, between 3 mm and 50 mm.

Each planar member includes a specialized and independent opening, completely contained therein on the planar member, wherein this opening is used to suspend or hang the planar member to dry, once it has been painted. Other openings disclosed herein are not suitable for this purpose, as they are too large, cause the card to lean to the side or at an angle when suspended or they aren't placed correctly on the card to be useful for this purpose.

Each planar member may include at least one coupling opening completely contained therein.

Each planar member may have a rectangular shape.

The material may consist essentially of ABS.

Implementations of a color matching method may comprise or consist essentially of: providing a color matching device, the color matching device consisting essentially of at least one planar member, each planar member consisting essentially of a material chosen from the group consisting of polycarbonate (PC), acrylonitrile butadiene styrene (ABS), polystyrene (PS), polybutylene terephthalate (PBT), polypropylene (PP), ethylene propylene diene monomer (EPDM), polyethylene terephthalate (PET), polyester (PE), a reinforced thermosetting resin, a glass fiber-reinforced resin, a reinforced polyester, a reinforced polyurethane, a fiber-reinforced polyester, a fiber-reinforced polyurethane, fiberglass, long fiber reinforced thermoplastic (LFRT), talc, and any combination thereof; adhering a paint onto the planar member; and comparing a color of the paint on the planar member with a color of a painted surface.

Implementations of a color matching method may include one, all, or any of the following:
Each planar member may have a thickness, measured as a shortest distance between a first largest face of the planar member and a second largest face of the planar member, of between .2 mm and 2 mm; each planar member may have a first length, substantially orthogonal to the thickness, of between .5 inches and 8 inches; and each planar member may have a second length, substantially orthogonal to the thickness and the first length, of between .5 inches and 14 inches.

The material may comprise or consist essentially of between 75 to 80 weight percent PP, 20 weight percent EPDM and 0 to 5 weight percent talc.

The material may comprise or consist essentially of ABS.

### BRIEF DESCRIPTION OF THE DRAWINGS

Implementations will hereinafter be described in conjunction with the appended drawings, which are intended to be representative only and not necessarily drawn to scale, and wherein like designations denote like elements:
FIG. 1 is a front perspective view of an implementation of a color matching device;
FIG. 2 is a bottom view of an implementation of a color matching device;
FIG. 3 is a bottom view an implementation of a color matching device with a layer of paint adhered thereto;
FIG. 4 is a front perspective view of an implementation of a color matching device;
FIG. 5 is a front perspective view of a plurality of implementations of color matching devices coupled together with a coupler;
FIG. 6 is a front perspective view of an implementation of a color matching device;
FIG. 7 is a front perspective view of a plurality of implementations of color matching devices coupled together with couplers; and
FIG. 8 is a front perspective view of an implementation of a color matching device.
FIG. 9 is a front perspective view of an implementation of a color matching device.

### DESCRIPTION

This disclosure, its aspects and implementations, are not limited to the specific components, assembly procedures or method elements disclosed herein. Many additional components, assembly procedures and/or method elements known in the art consistent with the intended color matching devices will become apparent for use with particular implementations from this disclosure. Accordingly, for example, although particular implementations are disclosed, such implementations and implementing components may comprise any shape, size, style, type, model, version, measurement, concentration, material, quantity, method element, step, and/or the like as is known in the art for such color matching devices, and implementing components and methods, consistent with the intended operation and methods.

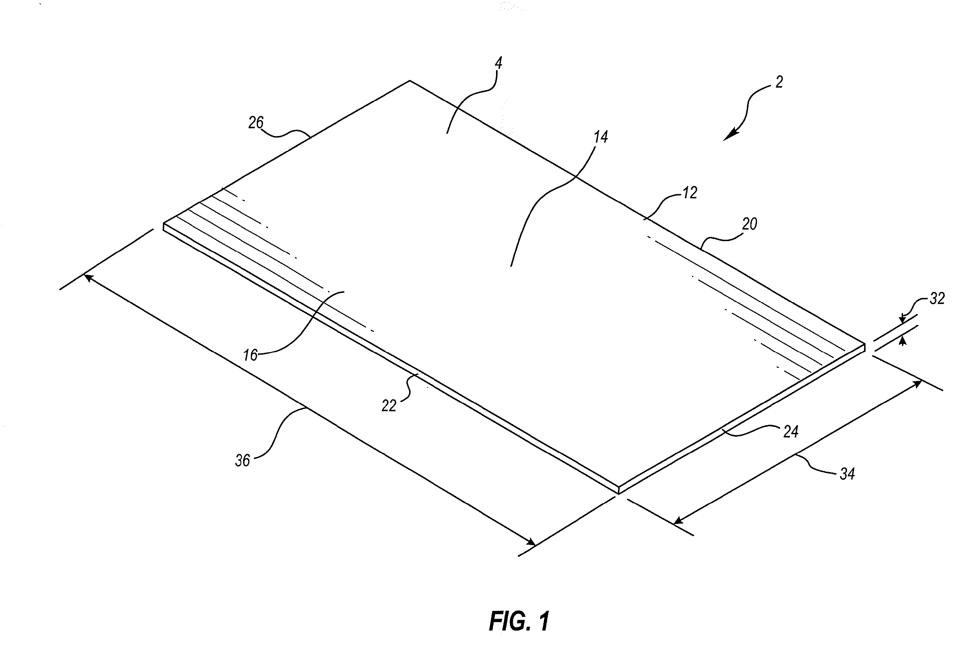

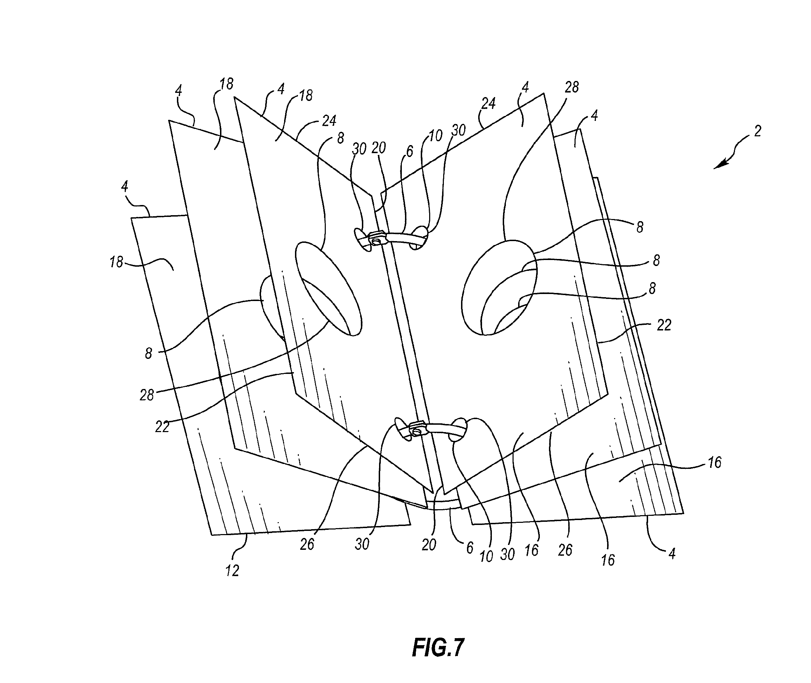

Referring now to FIG. 1, in implementations a color matching device 2 includes a planar member 4. In implementations the planar member 4 has a center 14 that lies halfway between a left surface 26 and right surface 24 and halfway between a top surface 20 and bottom surface 22. The planar member 4 in implementations has a thickness 32 that in implementations is between about, or is between, .2 mm and 2 mm. In implementations the thickness 32 is about, or is, .5 mm. The planar member 4 in implementations has a first length 34 that in implementations is between about, or is between, .5 inches and 8 inches. In implementations the first length 34 is about, or is, 4 inches. The planar member 4 in implementations has a second length 36 that in implementations is between about, or is between, .5 inches and 14 inches. In implementations the second length 36 is about, or is, 6 inches. In implementations the planar member 4 has a front face (first largest face) 16 and an outer perimeter 12. In implementations, as shown in FIG. 7, the planar member 4 has a rear face (second largest face) 18 opposite the front face 16. In implementations the first largest face 16 and second largest face 18 are substantially the same size.

In implementations the planar member 4 includes one or more of the following materials: polycarbonate (PC), acrylonitrile butadiene styrene (ABS), polystyrene (PS), polybutylene terephthalate (PBT), polypropylene (PP), ethylene propylene diene monomer (EPDM), polyethylene terephthalate (PET), polyester (PE), a reinforced thermosetting resin, a glass fiber-reinforced resin, a reinforced polyester, a reinforced polyurethane, a fiber-reinforced polyester, a fiber-reinforced polyurethane, fiberglass, long fiber reinforced thermoplastic (LFRT), talc, and any combination thereof. In implementations the planar member 4 consists essentially of a material chosen from the above group of materials. In implementations the material comprises or consists essentially of ABS. In implementations the material consists essentially of PP and EPDM. In implementations the material consists essentially of 80 weight percent PP and 20 weight percent EPDM. In implementations the material consists essentially of 75 weight percent PP, 20 weight percent EPDM and 5 weight percent talc. In implementations the talc may be included as a hardening agent and/or to keep the planar member 4 from bowing.

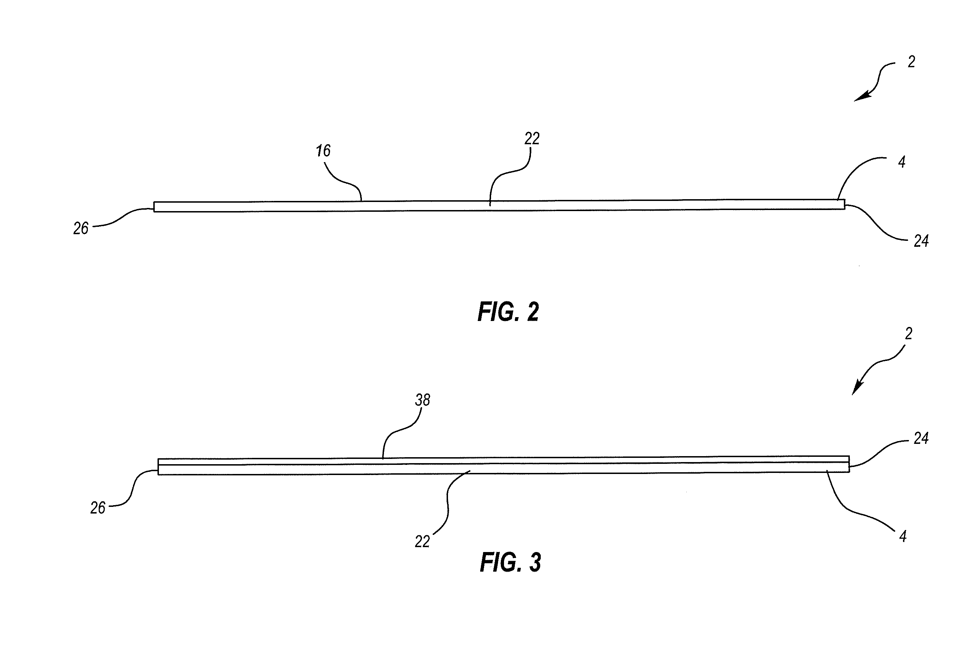

FIG. 2 shows a bottom view of a color matching device 2, and FIG. 3 shows a bottom view of a color matching device 2 with a layer of paint 38 adhered thereto. FIG. 3 is not drawn to scale.

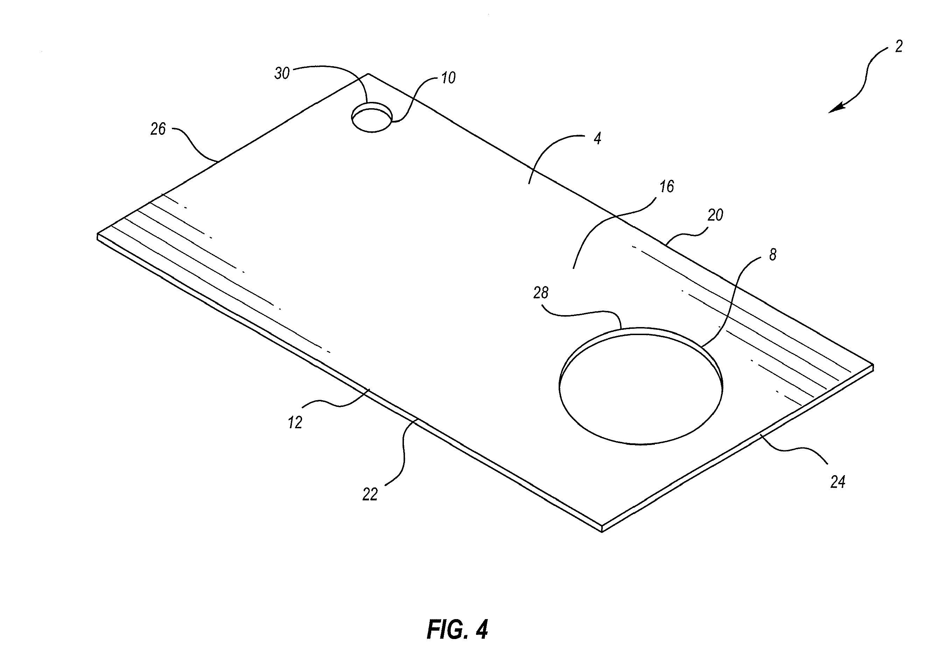

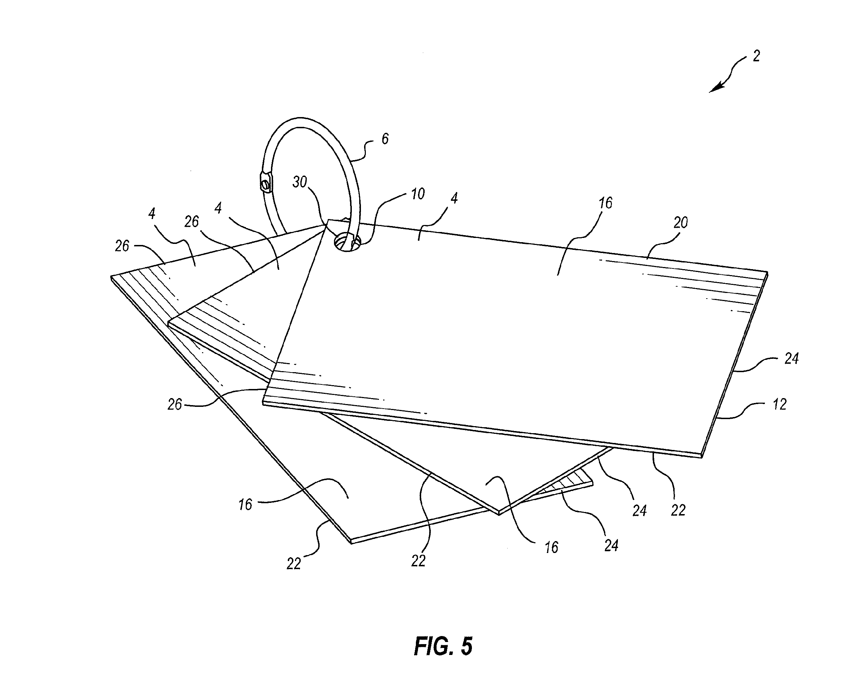

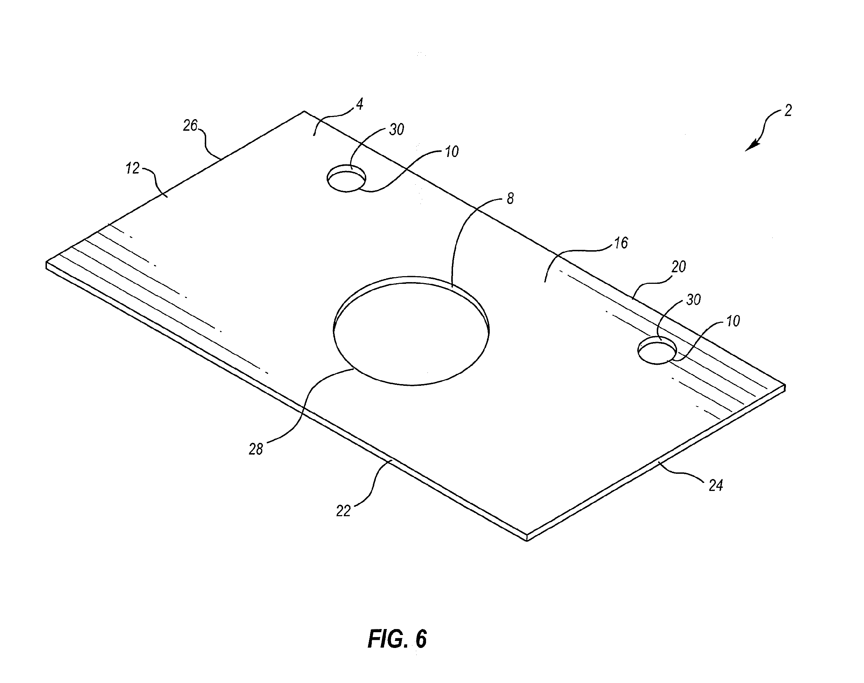

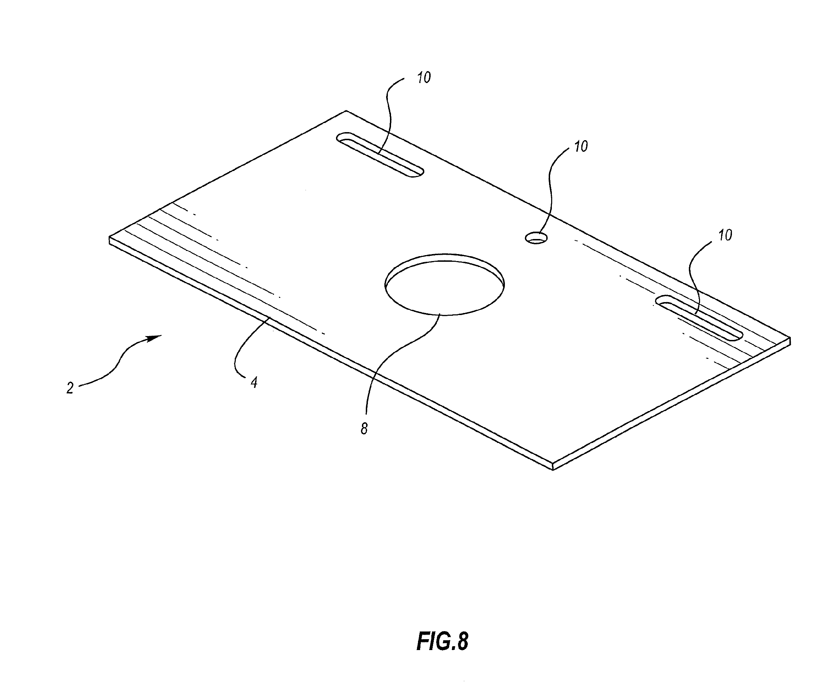

FIG. 4 shows an implementation of a color matching device 2 having an opening 8 therein defined by an edge 28. The color matching device also has a coupling opening 10 therein defined by a circumference 30. In implementations the opening 8 may be used to view a painted surface (or an unpainted surface) therethrough. For example, in implementations a paint may be adhered to the planar member 4, and then the planar member 4 may be placed close to a painted surface to see how closely the color of the paint on the planar member 4 resembles the color of the painted surface. In implementations the coupling opening 10 may be used to couple one or more planar members 4 together, such as with a coupler 6 as shown in FIG. 5. In implementations, as in FIG. 6, a color matching device 2 may have a pair of multiple coupling openings 10, and a pair of couplers 6 may be used, as shown in FIG. 7. In implementations a color matching device 2 may have more than two coupling openings 10, and one or more or all of the coupling openings 10 may form circles, or slots, or other shapes, such as in FIG. 8. In implementations the coupling openings 10 may be sized and/or shaped to be able to be used with varying types of coupling devices such as those common in the U.S., Europe, and other locations, including single ring, two ring, three ring, and other binding and or coupling mechanisms.

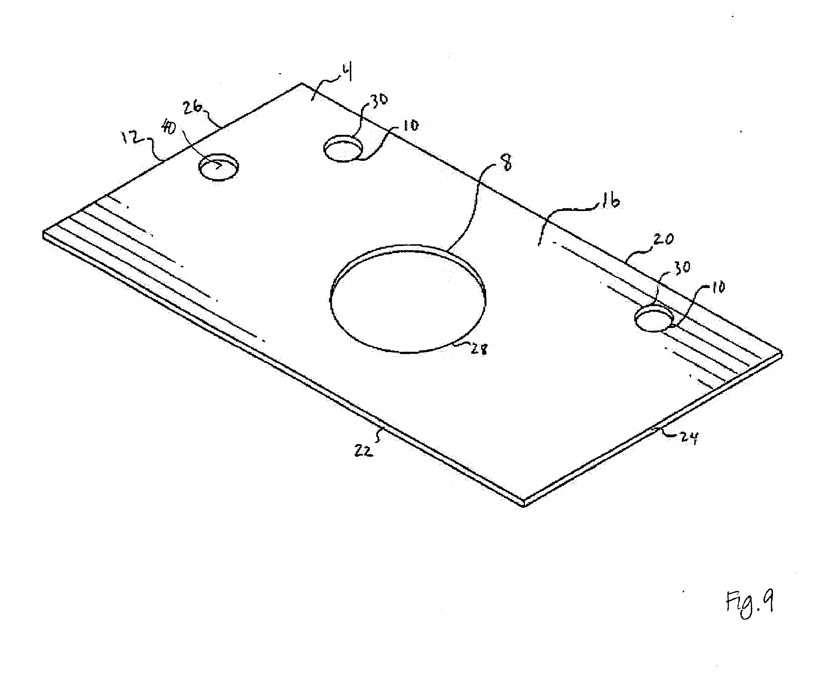

FIG. 9 shows a contemplated embodiment that has a unique inventive step over conventional color matching devices. Each planar member includes a specialized and independent opening, completely contained therein on the planar member, wherein this opening is used to suspend or hang the planar member to dry, once it has been painted. Other openings disclosed herein are not suitable for this purpose. Referring now to FIG. 9, in implementations a color matching device 2 includes a planar member 4. In implementations the planar member 4 has a center 14 that lies halfway between a left surface 26 and right surface 24 and halfway between a top surface 20 and bottom surface 22. Hang opening 40 is located between the top surface 20 and the bottom surface 22 and near the left surface 26 or the right surface 24.

Hang opening 40 is not something that can be replaced by using the other openings, such as opening 8 or one of the opening 30, because in each instance, the card will be hanging at an angle or in "landscape" form - both of which are detrimental. Hang opening 40 is specifically designed to allow the card to hang straight down to dry, while at the same time allowing other cards to be lined up next to the first card to dry in a similar fashion. While this seems like a simple solution, it is in fact an elegant and much needed one in the field of this subject matter, in that users were having problems suspending the wet cards to dry. They were either using openings that were specifically designed for other purposes in a makeshift attempt to solve the problem or were laying the cards flat. In either instance, the system was inadequate. Other openings disclosed herein are not suitable for this purpose, as they are too large, cause the card to lean to the side or at an angle when suspended or they aren't placed correctly on the card to be useful for this purpose.

In implementations a color matching device 2 may include only a single planar member 4, while in implementations multiple planar members 4 may be included, either coupled together or not coupled together with other planar members 4.

As indicated above, in implementations each planar member 4 may comprise or consist essentially of a material chosen from the group consisting of: polycarbonate (PC), acrylonitrile butadiene styrene (ABS), polystyrene (PS), polybutylene terephthalate (PBT), polypropylene (PP), ethylene propylene diene monomer (EPDM), polyethylene terephthalate (PET), polyester (PE), a reinforced thermosetting resin, a glass fiber-reinforced resin, a reinforced polyester, a reinforced polyurethane, a fiber-reinforced polyester, a fiber-reinforced polyurethane, fiberglass, long fiber reinforced thermoplastic (LFRT), talc, and any combination thereof. Each planar member 4 may include one or more of these materials in any percentage.

The color matching device 2 may be used to assist in matching a color to be painted onto a polymeric or composite portion of an automobile, such as a bumper, a fender flare, a polymer or composite body panel, and the like. In implementations the planar member 4 may be configured to have a static electricity configuration substantially equivalent to a static electricity configuration of one of the above portions of an automobile. In implementations this may be accomplished by forming the planar member 4 from substantially the same material as the item to be painted and/or by giving it a similar surface finish. In implementations a planar member 4 may have a more smooth finish on the front face 16 and a more coarse finish on the rear face 18, or vice versa, such as to mimic various finishes on automobile components. In implementations the static electricity configuration of the planar member 4 may allow the color matching device 2 to depict, more closely than a cardboard or paper paint card or spray out card, the color that will appear on a polymeric or composite portion of an automobile once painted. The color matching device 2 in implementations may be used for color matching with non-automobile-related items, such as for items in or on a building, and the like.

In implementations the planar member 4 may be substantially comprised of the same material as the bumper, fender flare, body panel, or other item to be painted. In implementations the chemical composition of the planar member 4 may be substantially equivalent to the chemical composition of the item to be painted.

Implementations of a color matching method may include providing a color matching device 2, the color matching device 2 including at least one planar member 4, each planar member 4 including one or more materials chosen from the group consisting of polycarbonate (PC), acrylonitrile butadiene styrene (ABS), polystyrene (PS), polybutylene terephthalate (PBT), polypropylene (PP), ethylene propylene diene monomer (EPDM), polyethylene terephthalate (PET), polyester (PE), a reinforced thermosetting resin, a glass fiber-reinforced resin, a reinforced polyester, a reinforced polyurethane, a fiber-reinforced polyester, a fiber-reinforced polyurethane, fiberglass, long fiber reinforced thermoplastic (LFRT), talc, and any combination thereof; adhering a paint onto the planar member 4; and comparing a color of the paint on the planar member 4 with a color of a painted surface. In implementations the step of comparing a color of the paint on the planar member 4 with a color of a painted surface may include viewing the painted surface through an opening in the planar member 4.

In places where the description above refers to particular implementations of color matching devices and implementing components, sub-components, methods and sub-methods, it should be readily apparent that a number of modifications may be made without departing from the spirit thereof and that these implementations, implementing components, sub-components, methods and sub-methods may be applied to other color matching devices. The terms "comprising," "comprises" and any variation, as used herein with respect to a list of method elements or article elements, are intended to be non-exclusive and convey that the method or article may include non-listed elements. For example, a list indicating that an article "comprises A, B and C" includes an article that has A, B and C and also includes an article that has A, B, C, D, E and F.

## Claims

1. A color matching device, comprising:
at least one planar member comprising at least one polymer, composite or combination thereof;
wherein each planar member comprises a thickness, measured as a shortest distance between a first largest face of the planar member and a second largest face of the planar member, of between about .2 mm and 2 mm;
wherein each planar member comprises a first length, substantially orthogonal to the thickness, of between about .5 inches and 8 inches; and
wherein each planar member comprises a second length, substantially orthogonal to the thickness and the first length, of between about .5 inch and 14 inches, wherein each planar member further comprises a hang opening centered between a top surface and a bottom surface of the planar member and positioned closer to either a right surface or a left surface of the planar member; wherein the first largest face is orthogonal to each of the top surface, bottom surface, right surface and left surface; wherein the top surface is parallel with the bottom surface; wherein the right surface is parallel with the left surface; wherein the top surface is orthogonal to the right surface.

2. The color matching device of claim 1, wherein the at least one planar member comprises a material chosen from the group consisting of polycarbonate (PC), acrylonitrile butadiene styrene (ABS), polystyrene (PS), polybutylene terephthalate (PBT), polypropylene (PP), ethylene propylene diene monomer (EPDM), polyethylene terephthalate (PET), polyester (PE), a reinforced thermosetting resin, a glass fiber-reinforced resin, a reinforced polyester, a reinforced polyurethane, a fiber-reinforced polyester, a fiber-reinforced polyurethane, fiberglass, long fiber reinforced thermoplastic (LFRT), talc, and any combination thereof.

3. The color matching device of claim 2, wherein the at least on planar member consists essentially of a material chosen from the group consisting of polycarbonate (PC), acrylonitrile butadiene styrene (ABS), polystyrene (PS), polybutylene terephthalate (PBT), polypropylene (PP), ethylene propylene diene monomer (EPDM), polyethylene terephthalate (PET), polyester (PE), a reinforced thermosetting resin, a glass fiber-reinforced resin, a reinforced polyester, a reinforced polyurethane, a fiber-reinforced polyester, a fiber-reinforced polyurethane, fiberglass, long fiber reinforced thermoplastic (LFRT), talc, and any combination thereof.

4. The device of claim 1, wherein the at least one planar member comprises a plurality of planar members that are coupled together with a coupler.

5. The device of claim 1, wherein each planar member comprises a second opening, completely contained therein, centered between a top surface and a bottom surface of the planar member and is centered between a right surface and a left surface of the planar member; wherein the first largest face is orthogonal to each of the top surface, bottom surface, right surface and left surface; wherein the top surface is parallel with the bottom surface; wherein the right surface is parallel with the left surface; wherein the top surface is orthogonal to the right surface, and; wherein the opening comprises a circle having a diameter, measured parallel with the first largest face, between .03125 inches and 10 inches.

6. The device of claim 1, wherein the material consists essentially of 80 weight percent PP and 20 weight percent EPDM.

7. The device of claim 1, wherein the material consists essentially of 75 weight percent PP, 20 weight percent EPDM and 5 weight percent talc.

8. The device of claim 1, wherein a chemical composition of the material is substantially equivalent to a chemical composition of one of an automobile bumper, an automobile fender flare or an automobile body panel.

9. The device of claim 1, wherein each planar member is configured to have a static electricity configuration substantially equivalent to a static electricity configuration of one of an automobile bumper, an automobile fender flare or an automobile body panel.

10. The device of claim 9, wherein each planar member is configured to have a static electricity configuration substantially equivalent to a static electricity configuration of one of an automobile bumper, an automobile fender flare or an automobile body panel.

11. The device of claim 1, wherein each planar member comprises at least one coupling opening completely contained therein.

12. The device of claim 1, wherein each planar member comprises a rectangular shape.
